# EUROPEAN PATENT APPLICATION

(11) **EP 2 141 616 A1**
(43) Date of publication of application: **06.01.2010**
(21) Application number: 08254098.0
(22) Date of filing: 22.12.2008
(51) Int. Cl.: G06F 17/30

(54) **Method and apparatus for integrated NAS and CAS data backup**

(30) Priority: 24.06.2008 US 144838
(71) Applicant: Hitachi Ltd., Chiyoda-ku Tokyo (JP)
(72) Inventor: Otani, Toshio, Tokyo 100-8220 (JP); Shitomi, Hidehisa, Tokyo 100-8220 (JP)
(74) Representative: Moore, Graeme Patrick

(57) **Abstract**

An integrated NAS and CAS storage system and method. System includes NAS and CAS devices and NAS and CAS clients. NAS device includes a NAS head for file sharing, and a storage system providing disk volume to store files. CAS device includes CAS head for archiving files, and a storage system providing disk volume to store archived files. CAS client includes archive AP for migrating files from NAS device to CAS device for archiving, and generating stub data indicating destination file path of archived data. When NAS client accesses stub data, NAS device receives data from CAS device and sends the data to NAS client. When NAS client accesses stub data as backup server, NAS device merely sends stub data to NAS client. NAS device employs methods of classifying the access type from NAS client, as normal NAS access or special NAS access for backup operation.

## Description

This invention is related generally to managing data in computerized storage systems and, more particularly, to archiving of data stored on Network Attached Storage (NAS) by transfer of the data to Content Addressed Storage (CAS).

The amount of digital data, especially file data, is growing rapidly. NAS provides the proper storage device, which allows a number of computers to share file data via a network. Currently, a large percentage of file data storage utilizes NAS devices.

Digital data, including data files, may need to be stored for long periods of time for different purposes, for example, in order to comply with various regulatory requirements. CAS provides a long term data archive solution with the guarantee of data immutability. Generally, active data is stored in NAS devices while it is in use and subsequently migrated into CAS devices in order to be archived. The migrated data may also be referred to as archived data. For example, e-mail data on a NAS device may be archived into a CAS device for regulatory compliance.

When a data file is archived, the pathname of the archived file is changed. For example, the pathname of fileA may be changed from //NAS-A/share/fileA to //CAS-A//archive/fileA. To inform a NAS client of the change of file pathname, stub information is generated on the NAS devices. The stub includes the source location on the NAS device and the destination location of the file on the CAS device. Using stub information allows the NAS client to be informed of the change of pathname caused by file migration and archiving. The stub information has the destination file path of the file after migration. Using this stub information the NAS client can know where the archived file data is actually located.

To prevent data loss, backup operation of NAS devices is required. When the NAS device and the CAS device consolidate their namespace, using Global Namespace (GNS), the following problem will occur during backup. The root NAS device consolidates a number of other NAS devices and CAS devices to provide a single namespace to the NAS client. The NAS client may access the root NAS device to retrieve any data which is stored in this namespace. If the root NAS device receives read access of stub data from the NAS client, it will get the actual archived data in the CAS device derived from stub data and will send it to the NAS client. However, if the actual archived data is restored only to be backed up in the CAS device again, the archived data itself does not need to be backed up as NAS backup. Restoring the archived data in NAS devices for backup only, would waste backup time and the available storage capacity of the backup volume.

The actual archived data file is restored into the NAS device during the data restoration operation. However, this actual archived data file is not stored in the NAS devices on a long-term basis and is moved back into the CAS device again for archive storage. This operation of restoring from CAS and archiving back to CAS also results in a waste of the backup volume capacity and backup time.

The inventive methodology is directed to methods and systems that substantially obviate one or more of the above and other problems associated with conventional techniques for managing data in computerized storage systems.

Various aspects of the present invention provide an integrated approach to data backup and restoration between NAS and CAS storage systems.

One aspect of the present invention preferably includes a system comprising a NAS device, a CAS device, a NAS client and a CAS client. The NAS device preferably has a NAS head which provides the function of file sharing, and a storage system which provides disk volume to store file data. The CAS device preferably has a CAS head which provides the function of archiving files, and a storage system which provides disk volume to store archived data. The CAS client preferably includes an archive Application Program (AP) which migrates data files from the NAS device to the CAS device for data archiving, and preferably generates stub data which indicates the destination file path of the archived data. When the NAS client accesses the stub data, the NAS device preferably gets actual data from the CAS device and sends it to the NAS client. However, when the NAS client, operating as backup server, accesses the stub data, the NAS device preferably does not get actual data from the CAS device, and just sends the stub data to the NAS client. In order to achieve this, the NAS device is preferably capable of classifying the access type from the NAS client and determining whether the access from the NAS client is a normal NAS access or a special NAS access for backup operation.

In various aspects of the present invention, classifying the access type is achieved by various methods.

In a first method of classifying the access type, according to aspects of the present invention, the NAS client preferably embeds certain specific information into a NAS access packet. The specific information preferably indicates whether or not an access by the NAS client is special NAS access for backup operation.

In a second method of classifying the access type, according to aspects of the present invention, the NAS device uses authentication. In this method, the NAS device preferably has authentication information and determines whether an access by the NAS client is a normal NAS access or a special NAS access for backup operation.

In a third method of classifying the access type, according to aspects of the present invention, the NAS device preferably has access control information that determines whether an access by the NAS client is normal NAS access or special NAS access for backup operation.

In a fourth method of classifying the access type, according to aspects of the present invention, the NAS device preferably uses a specific destination address or destination port of the NAS device. In this method, a NAS access coming to a specific destination address or to a specific destination port of the NAS device will be processed as a special NAS access for backup operation.

In a fifth method of classifying the access type, according to aspects of the present invention, any combination of two or more of the above four methods may be used.

One aspect of the present invention preferably includes a system including a NAS device, a CAS device, a NAS client and a CAS client. Archived data is preferably erased, during a data shredding process, when there is no further need to store the data. The NAS device preferably determines whether actual archive data corresponding to the stub data still exists in the CAS device or not. In one aspect of the present invention, the NAS device may check the expiration of the stub, when write access is requested by NAS client during an operation for restoring of data. In one aspect of the present invention, the NAS device may check the expiration of the stub periodically. In one aspect of the present invention, the CAS device or the CAS client informs the erasure of the archive data to the NAS device.

In accordance with one aspect of the inventive methodology, there is provided a computerized data storage system preferably including an active data storage device incorporating an active data storage unit operable to store active data and an active data sharing device configured to enable sharing of the stored active data and an archive data storage device incorporating an archive data storage unit configured to store archive data and an archiving device configured to enable archiving of the active data to the archive data storage unit. The inventive system preferably further incorporates a first client including an archive module configured to migrate the active data from the active data storage device to the archive data storage device for archiving and further configured to make a stub data indicating destination of the archive data in the archive data storage device, the archive data corresponding to the migrated active data; and a second client configured to send data access command to the active data storage device, wherein the active data storage device is configured to classify a type of the data access command received from the second client and to provide the second client the stub data or the archive data depending on the type of the received data access command.

In accordance with another aspect of the inventive methodology, there is provided a computerized data storage system preferably including a active data storage device incorporating an active data storage unit configured to store active data and an active data sharing device configured to enable sharing of the stored active data and an archive data storage device incorporating an archive data storage unit configured to store archive data and an archiving device configured to enable archiving of the active data to the archive data storage unit. The inventive system preferably further incorporates a first client comprising an archive module configured to migrate the active data from the active data storage device to the archive data storage device for archiving and further configured to make a stub data indicating destination of the archive data in the archive data storage device, the archive data corresponding to the migrated active data; and a second client configured to send data access command to the active data storage device, wherein the archive data storage device is configured to erase the archive data corresponding to the stub data after a predetermined time period and wherein active data storage device is configured to verify whether the archive data corresponding to the stub data exists in the archive data storage device.

In accordance with yet another aspect of the inventive methodology, there is provided a method performed in a computerized storage system incorporating an active data storage device and an archive data storage device. The inventive method preferably involves: storing active data in the active data storage device; archiving the active data as archive data to the archive data storage device; writing a stub data to the active data storage device, the stub data indicating destination of the archive data in the archive data storage device, the archive data corresponding to the archived active data; receiving a data access command; and classifying a type of the received data access command and returning the stub data or the archive data depending on the type of the received data access command.

In accordance with a further aspect of the inventive methodology, there is provided a method performed in a computerized storage system incorporating an active data storage device and an archive data storage device. The method preferably involves: storing active data in the active data storage device; archiving the active data as archive data to the archive data storage device; writing a stub data to the active data storage device, the stub data indicating destination of the archive data in the archive data storage device, the archive data corresponding to the archived active data; receiving a data access command; erasing the archive data corresponding to the stub data after a predetermined time period; and verifying whether the archive data corresponding to the stub data exists in the archive data storage device.

In accordance with yet further aspect of the inventive methodology, there is provided a computer readable medium embodying a set of instructions, the set of instructions, when executed by one or more processors of a computerized storage system incorporating an active data storage device and an archive data storage device, preferably causing the one or more processors to perform a method involving: storing active data in the active data storage device; archiving the active data as archive data to the archive data storage device; writing a stub data to the active data storage device, the stub data indicating destination of the archive data in the archive data storage device, the archive data corresponding to the archived active data; receiving a data access command; and classifying a type of the received data access command and returning the stub data or the archive data depending on the type of the received data access command.

In accordance with yet further aspect of the inventive methodology, there is provided a computer readable medium embodying a set of instructions, the set of instructions, when executed by one or more processors of a computerized storage system incorporating an active data storage device and an archive data storage device, preferably causing the one or more processors to perform a method involving: storing active data in the active data storage device; archiving the active data as archive data to the archive data storage device; writing a stub data to the active data storage device, the stub data indicating destination of the archive data in the archive data storage device, the archive data corresponding to the archived active data; receiving a data access command; erasing the archive data corresponding to the stub data after a predetermined time period; and verifying whether the archive data corresponding to the stub data exists in the archive data storage device.

Additional aspects related to the invention will be set forth in part in the description which follows, and in part will be obvious from the description, or may be learned by practice of the invention. Aspects of the invention may be realized and attained by means of the elements and combinations of various elements and aspects particularly pointed out in the following detailed description and the appended claims.

It is to be understood that both the foregoing and the following descriptions are exemplary and explanatory only and are not intended to limit the claimed invention or application thereof in any manner whatsoever.

### BRIEF DESCRIPTION OF THE DRAWINGS

The accompanying drawings, which are incorporated in and constitute a part of this specification exemplify the embodiments of the present invention and, together with the description, serve to explain and illustrate principles of the inventive technique. Specifically:

Figure 1, Figure 2(a) and Figure 2(b), show an exemplary physical and logical system structure of the present invention.

Figure 3(a) shows an exemplary stub table according to aspects of the present invention. Figure 3(b) shows an exemplary StubAct table according to aspects of the present invention.

Figure 4 shows an exemplary NAS access packet to be used with a first method of accessing a data file, according to aspects of the present invention.

Figure 5 shows a normal read procedure, carried out according to the first method of accessing a data file, according to an exemplary aspect of the present invention.

Figure 6 shows a special read procedure, carried out according to the first method of accessing a data file, according to an exemplary aspect of the present invention.

Figure 7(a), Figure 7(b) and Figure 7(c) show examples of authentication and access control information to be used with a second method and a third method of accessing a data file, according to aspects of the present invention.

Figure 8 shows a normal procedure, carried out according to the second method and the third method of accessing a data file, according to an exemplary aspect of the present invention.

Figure 9 shows a special procedure, carried out according to the second method and the third method of accessing a data file, according to an exemplary aspect of the present invention.

Figure 10(a) and Figure 10(b) show examples of specific destination address and port of NAS device to be utilized with a fourth method of accessing a data file, according to aspects of the present invention.

Figure 11 shows a normal procedure, carried out according to a fourth method of accessing a data file, according to an exemplary aspect of the present invention.

Figure 12 shows a special procedure, carried out according to the fourth method of accessing a data file, according to an exemplary aspect of the present invention.

Figure 13(a) shows the exemplary procedure of classification, according to one aspect of the present invention.

Figure 13(b) shows the exemplary procedure of classification, according to another aspect of the present invention.

Figure 14, Figure 15 and Figure 16 show the exemplary handling of a read access of backup operation, according to aspects of the present invention.

Figure 17, Figure 18, Figure 19, Figure 20 and Figure 21 show various exemplary methods of checking stub expiration according to aspects of the present invention.

Figure 22 illustrates an exemplary embodiment of a computer platform upon which the inventive system may be implemented.

### DETAILED DESCRIPTION

In the following detailed description, reference will be made to the accompanying drawing(s), in which identical functional elements are designated with like numerals. The aforementioned accompanying drawings show by way of illustration, and not by way of limitation, specific embodiments and implementations consistent with principles of the present invention. These implementations are described in sufficient detail to enable those skilled in the art to practice the invention and it is to be understood that other implementations may be utilized and that structural changes and/or substitutions of various elements may be made without departing from the scope and spirit of present invention. The following detailed description is, therefore, not to be construed in a limited sense. Additionally, the various embodiments of the invention as described may be implemented in the form of a software running on a general purpose computer, in the form of a specialized hardware, or combination of software and hardware.

Aspects of the present invention provide systems and methods for reducing storage volume and backup time for data backup operations in integrated NAS and CAS storage systems. Aspects of the present invention are not limited to using Network File System (NFS) protocol and may adopt other file sharing protocols including Common Internet File System (CIFS), Hypertext Transfer Protocol (HTTP) and the like.

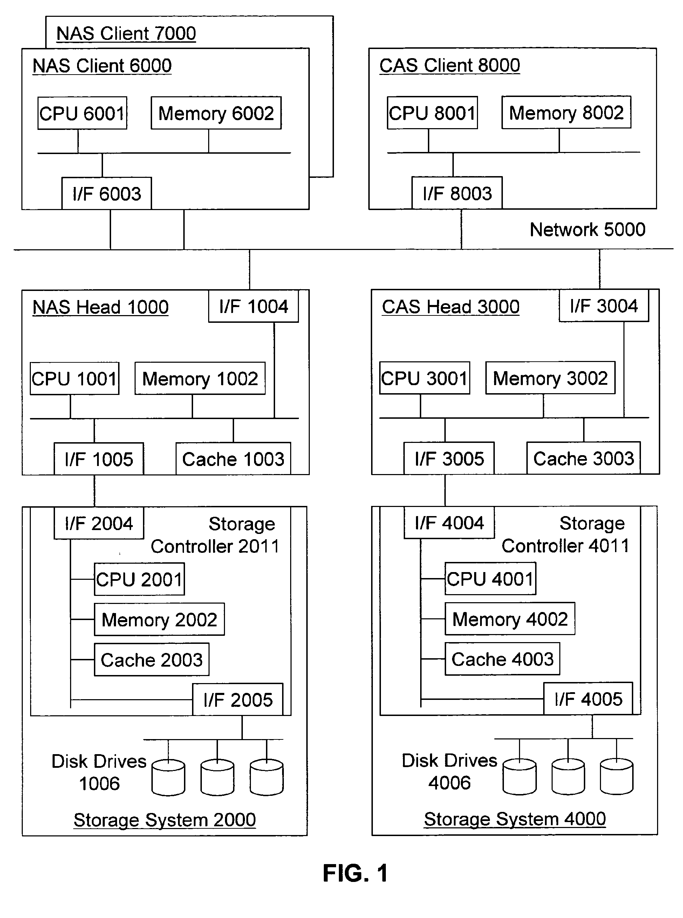

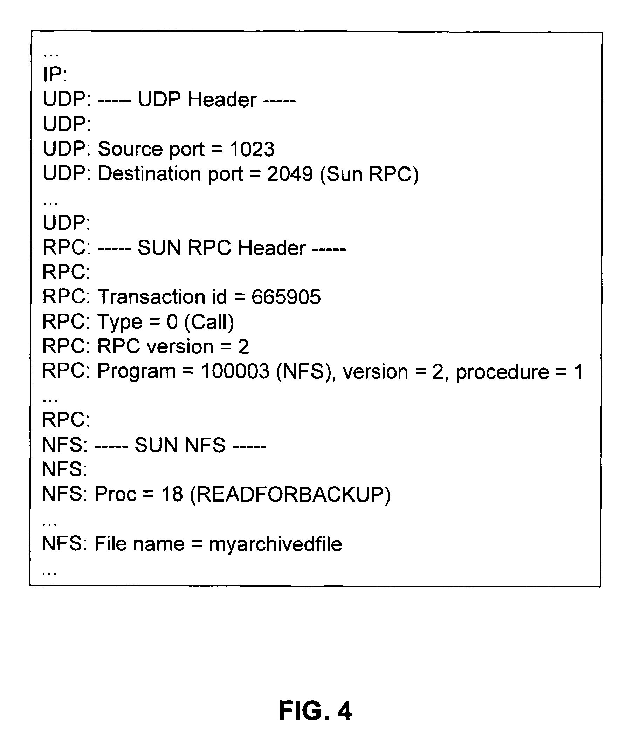

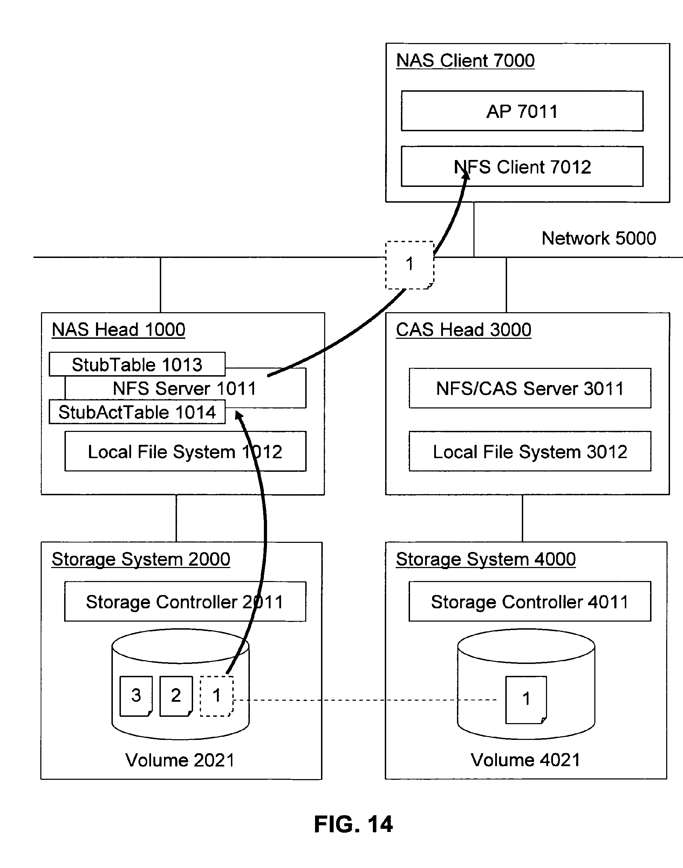

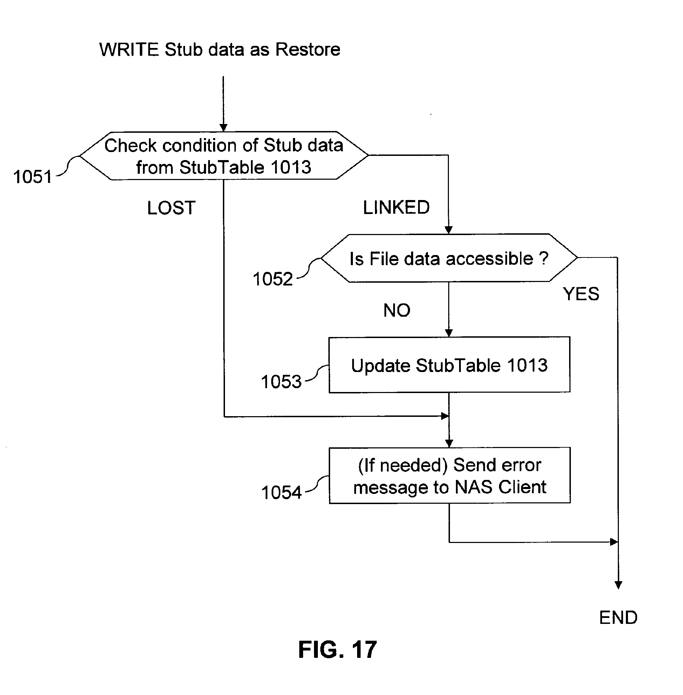

Figure 1, Figure 2(a), Figure 2(b), Figure 3(a) and Figure 3(b) are directed to aspects of system structure. Figure 4, Figure 5, Figure 6, Figure 7(a), Figure 7(b), Figure 7(c), Figure 8, Figure 9, Figure 10(a), Figure 10(b), Figure 11, Figure 12, Figure 13(a) and Figure 13(b) are directed to aspects of classification methods of normal and backup NAS access. Figure 14, Figure 15 and Figure 16 are directed to handling read access of backup operation. Figure 17, Figure 18, Figure 19, Figure 20 and Figure 21 are directed to checking stub expiration.

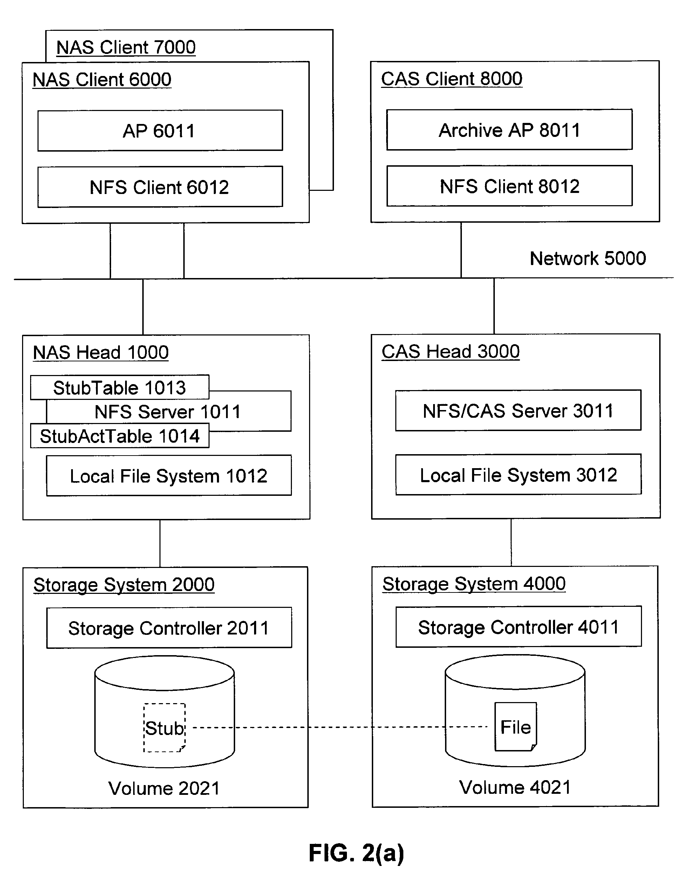

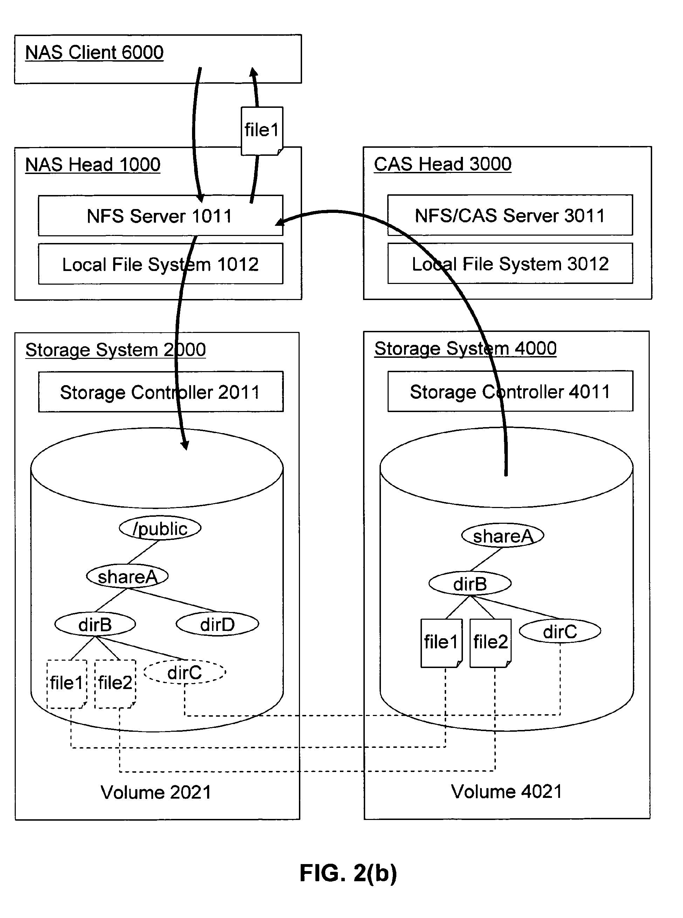

Figure 1, Figure 2(a) and Figure 2(b), show an exemplary physical and logical system structure of the present invention.

The exemplary system structure includes a NAS head 1000, a storage system 2000, a CAS head 3000, a storage system 4000, a first NAS client 6000, a second NAS client 7000 and a CAS client 8000. A network 5000 couples together the various components of the exemplary system. In the exemplary system shown, the first NAS Client 6000 operates as a normal NAS client and the second NAS Client 7000 operates as a backup server.

Figure 1 shows the hardware portion of the system. The NAS head 1000, the CAS head 3000, the NAS client 6000, 7000, and the CAS client 8000 each include a CPU 1001, 3001, 60001, 8001 and a memory 1002, 3002, 6002, 8002. The NAS head 1000 and the CAS head 3000 also include a cache 1003, 3003. The storage systems 2000, 4000 each include a storage controller 2011, 4011 and disk drives 1006, 4006. The storage controllers 2011, 4011 each in turn include a CPU 2001, 4001, a memory 2002, 4002 and a cache 2003, 4003. Each component includes one or more interfaces (I/F) to couple the device to the network or to another device. The NAS head 1000 includes I/F 1005, the CAS head 3000 includes I/F 3005, the storage controller 2011 includes I/F 2004, 2005, the storage controller 4011 includes I/F 4004, 4005, the NAS client 6000 includes I/F 6003 and the CAS client 8000 includes I/F 8003.

Figure 2(a) shows the files and applications residing on the various components of the system. The NAS client 6000 includes AP 6011 and NFS client 6012. The CAS client 8000 includes the archive AP 8011 and NFS client 8012. The NAS head 1000 includes a NFS server program 1011 and a local file system 1012. A stub table 1013 and a StubAct table 1014 are also located on the NAS head 1000. The CAS head 3000 includes NFS/CAS server 3011 and the local file system 3012. The storage system 2000 includes a volume 2021 where the stubs reside. The storage system 4000 includes a volume 4021 where the files reside.

The NAS head 1000 and the storage system 2000, together, act as a NAS device. The NAS Head 1000 provides the function of file sharing, and is coupled to the storage system 2000 which provides disk volume to store file data. The NFS server program 1011 is an application program which provides the NFS function. The local file system 1012 is the file system of the NAS Head 1000 and may be a Windows NT file system (NTFS), the second extended files system (ext2) or the third extended file system (ext3) for Linux. The storage controller 2011 provides a block storage function such as Fibre Channel Storage Area Network (FC-SAN) and the like.

The CAS head 3000 and the storage system 4000 together behave as a CAS device. The CAS head 3000 provides the function of archiving data, and is coupled to the storage system 4000 which provides disk volume to store the data.

The volume 2021 stores the stub data which is linked to the actual file stored on the volume 4021. The stub may be represented as a symbolic link, for example, a soft link. The symbolic link is the file object stored on the volume 2021 and shared by the NAS head 1000 via the NFS server 1011. The symbolic link has the location information of another file object or another directory object. When the NAS client accesses the symbolic link, it is referred to another location which is described by the symbolic link. The other location has the real data.

Figure 2(b) shows the operation of the system. The NAS client 6000 is shown to access the NFS file server program 1011 on the NAS head 1000. The NFS file server program 1011 in turn accesses the volume 2021 on the storage system 2000 that is coupled to the NAS head 1000. The volume 2021 includes the stub that provides the location information of the actual data stored on the volume 4021. The volume 4021, and therefore the actual data, is located on the storage system 4000 that is part of the CAS system. The actual data file is provided from the volume 4021 of the CAS system to the NFS server program 1011 on the NAS head 1000 and from there to the NAS client 6000 that originally requested the data file. Arrows of Figure 2(b) show this process.

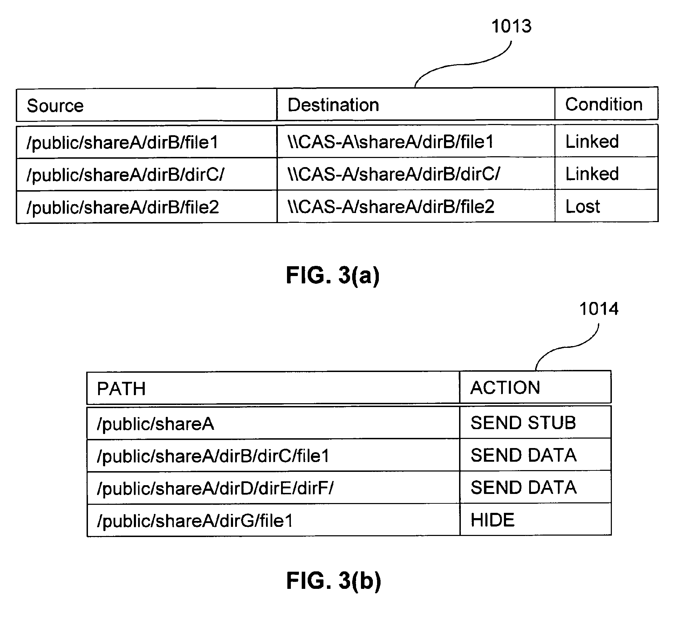

The CAS client 8000 includes the archive AP 8011. The archive AP has the function of data archiving. To archive data, that is available in a data file, on the NAS device, the archive AP moves the data from the NAS device to the CAS device. At this time, the archive AP generates stub data that remain on NAS device in place of the moved data file. The location of the stub data is the same as the location of the file that was moved by the archive AP. The relationship between the stub data and the moved file is managed by the stub table 1013 shown in Figure 3(a).

The NAS client 6000, 7000 includes the NFS client function 6012 which allows the AP 6011 to access data in a data file on the NAS device via the NFS protocol. The NAS client and the NAS device are coupled by the network 5000 that may be a Local Area Network (LAN).

In order to consolidate the NAS and the CAS devices, the GNS technology may be adopted. Other technologies may also be used to provide the consolidation. When using GNS, the NAS client accesses the NAS head to obtain the archived data on the CAS via stub data. As such, the NAS client does not access the CAS head directly. This allows the NAS client to see a single consolidated namespace which may be constructed from a number of NAS and CAS devices.

Figure 3(a) shows an exemplary stub table according to aspects of the present invention.

The stub table 1013 shown in Figure 3(a) includes three columns for listing source, destination and condition of each data file stored on the CAS system. The source column includes the file path to the source location of a data file on the NAS system where the data file resided before being archived on the CAS system. The destination column shows the file path to the destination location of the data file where the data file is actually stored on the CAS system. The condition column shows whether the stub and the actual file remain linked or the link between the two is lost. The link may be lost, for example, because the archived data has been erased and is no longer on the CAS device.

Figure 3(b) shows an exemplary StubAct table according to aspects of the present invention.

The StubAct table 1014 shown in Figure 3(b) includes two columns showing the path to the data file on the NAS system and the action that is desired to be performed on the data file. The action column includes three types of action: send stub, send data or hide. The send stub action sends only the stub showing the location of the actual storage of the data file on the CAS system to a requesting NAS client. The send data action retrieves the actual data from the CAS systems and sends the actual data to the NAS client.

Figure 4, Figure 5, Figure 6, Figure 7(a), Figure 7(b), Figure 7(c), Figure 8, Figure 9, Figure 10(a), Figure 10(b), Figure 11, Figure 12, Figure 13(a) and Figure 13(b) show classification methods of normal and special NAS access according to aspects of the present invention. The special NAS access is a read access for backup operation.

Various classification methods of normal and special NAS access according to different aspects of the present invention are described as four different methods. Any combination of these methods is also an aspect of the invention and the division into four methods is only for ease of description.

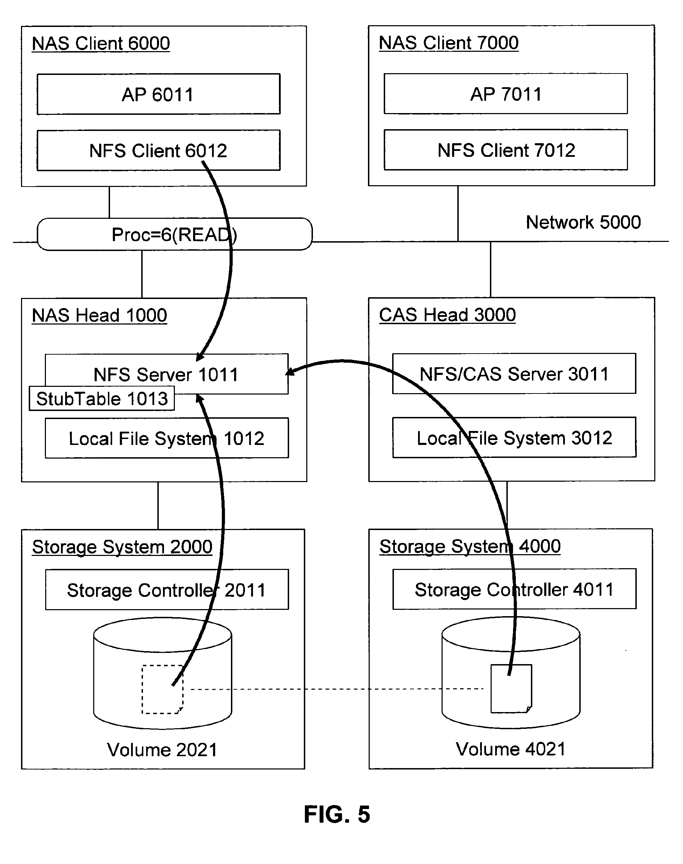

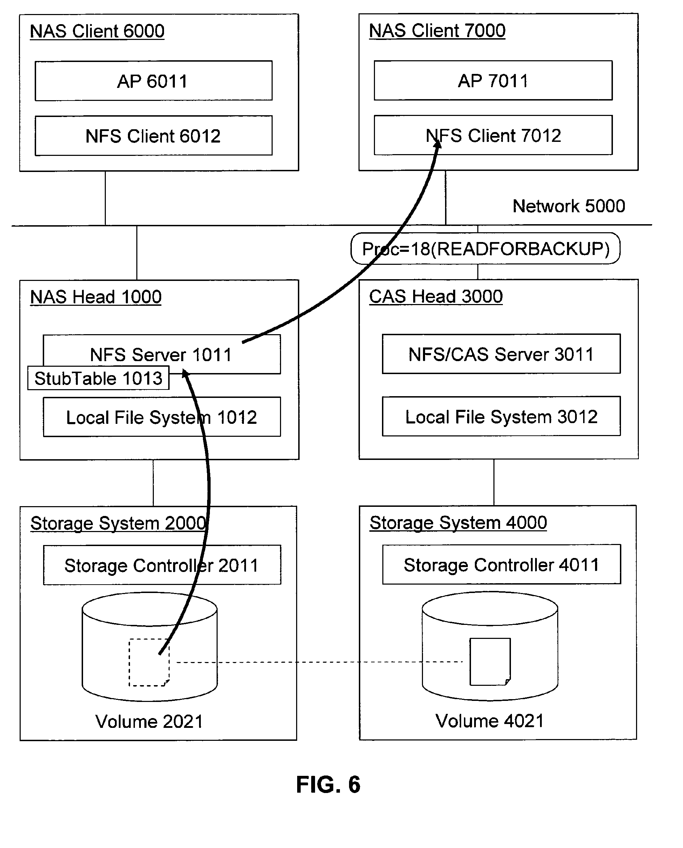

Figure 4 shows an exemplary NAS access packet to be used with a first method of accessing a data file, according to aspects of the present invention. Figure 5 shows a normal read procedure, carried out according to the first method of accessing a data file, according to an exemplary aspect of the present invention. Figure 6 shows a special read procedure, carried out according to the first method of accessing a data file, according to an exemplary aspect of the present invention.

A first method of accessing a data file includes adding specific information to a NAS access packet. The NAS client embeds the specific information into the NAS access packet. The NAS client indicates in the NAS access packet that its access is special NAS access for backup operation. Figure 4 shows an exemplary NAS access packet used by NFS v2. As described by RFC 1094 (http://www.ietf.org/rfc/rfc1094.txt), there are several types of NFS server procedures. For instance, a new type of procedure 18 (READFORBACKUP) is issued by the NAS client which acts as backup server. This allows the NAS device to classify normal and backup NAS access and separate the two from each other.

In Figure 5, the NAS client sends a normal procedure 6, that happens to be a READ command, and the NAS device identifies the procedure as normal and processes the procedure as a normal NAS read access. The arrows show the progression of the process. The NFS client 6012 of the NAS client 6000 sends the normal read procedure command to the NFS server 1011 on the NAS head 1000. The NFS server 1011 identifies the stub in the stub table 1013, checks the identified stub in the volume 2021 and gets the actual data file from the CAS head 3000.

In Figure 6 the NAS client sends a specific procedure 18 (READFORBACKUP) to the NAS device. The NAS device processes this procedure as a backup NAS read access. The NFS server 1011 sends the stub data to the NAS client, without referring to the CAS device and without getting the actual data from the CAS device. The READFORBACKUP procedure 18 is requested by the NAS client 7000 that is functioning as a backup server. The NFS server 1011 of the NAS head 1000 receives the request and identifies the request as a special request that is for backup only. In that case, the NFS server 1011 retrieves only the stub data from the volume 2021 of the storage system 2000 and provides the stub data to the NAS client 7000. There is no need to access the volume 4021 on the CAS system in order to retrieve the actual data. This method, therefore, saves both the time that would have been expended in retrieving actual data files from the storage volume on the CAS system and the time required for sending them to the NAS client. Instead, the much shorter stub information is retrieved and sent to the NAS client that is operating in a backup server role.

The special read access, otherwise known as the READFORBACKUP procedure of Figure 6 may be performed in different ways that are described with respect to Figure 14, Figure 15 and Figure 16 below. The entries of the StubAct table 1014 determine the type of special read procedure that is performed.

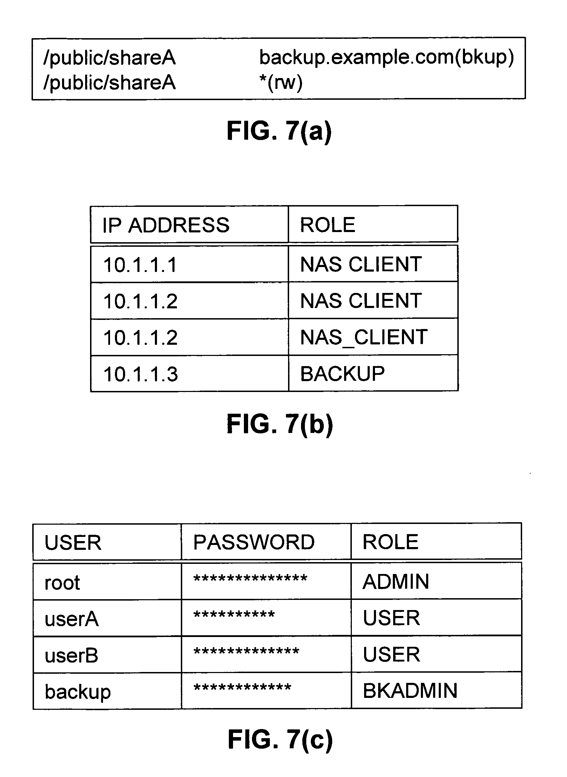

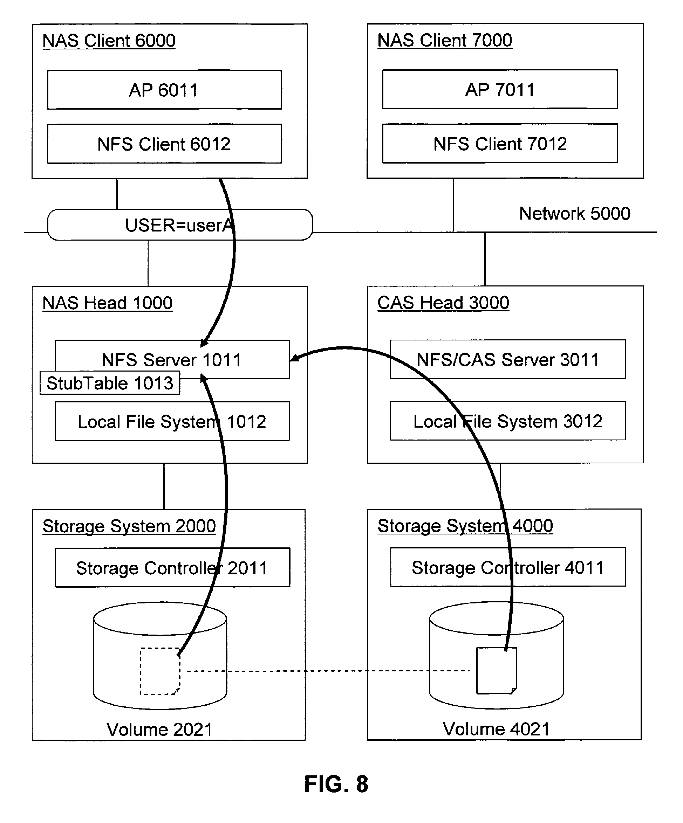

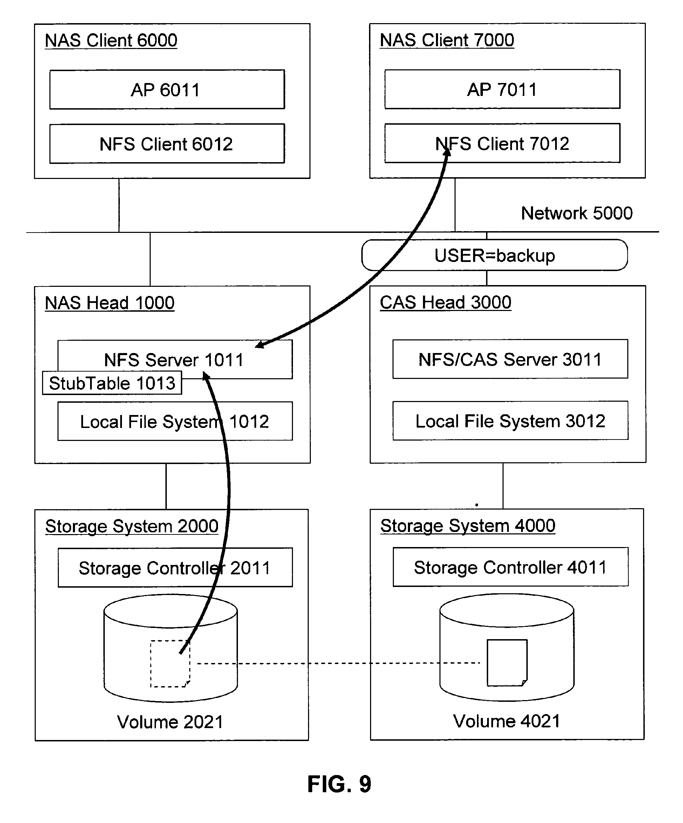

Figure 7(a), Figure 7(b) and Figure 7(c) show examples of authentication and access control information to be used with a second method and a third method of accessing a data file, according to aspects of the present invention. Figure 8 shows a normal procedure, carried out according to the second method and the third method of accessing a data file, according to an exemplary aspect of the present invention. Figure 9 shows a special procedure, carried out according to the second method and the third method of accessing a data file, according to an exemplary aspect of the present invention.

A second method of accessing a data file includes using authentication and a third method of accessing a data file includes using access control. The second and third methods are described together with reference to Figure 7(a), Figure 7(b), Figure 7(c), Figure 8 and Figure 9.

The NAS device includes authentication or access control information that determine whether and access to the NAS system is normal NAS access or special NAS access for backup operation. Figure 7(a), Figure 7(b) and Figure 7(c) show various exemplary sets of authentication or access control information. Figure 7(a) includes a column showing a directory and a second column including the site address for a NAS client. The NAS client at the site address, shown in the second column, is permitted to access the information in the directory shown in the first column. Figure 7(b) includes a column listing IP addresses of different clients and another column listing the role of the client at each IP address. Figure 7(c) includes a column listing the user identification, a second column listing the associated password for each user and a third column listing the role of each user.

In Figure 7(a), NAS access from the NAS client backup.example.com is identified as access for backup purposes. In Figure 7(b), NAS access from the NAS client with the IP address of 10.1.1.3 is identified as access for backup purposes. In Figure 7(c), NAS access from the NAS client authenticated as USER= "backup" is identified as an access for backup purposes.

Figure 8 shows the process of access by a NAS client that is identified by the NAS system using the authentication or access control methods as a regular user that is in need of the actual data. In Figure 8, when the NAS client has been authenticated as USER="userA," the NAS device processes an access request from this NAS client as normal NAS read access. As shown, the NFS server 1011 checks the stub associated with the requested data file and retrieves the actual file from the CAS head 3000.

Figure 9 shows the process of access by a NAS client that is identified by the NAS system using the authentication or access control methods as a user that is accessing the data for backup purposes only. In Figure 9, when the NAS client has been authenticated as USER= "backup," the NAS device will process an access request from this NAS client as a backup NAS read access. In this case, the NFS server 1011 sends only the stub data to NAS client without referring to the CAS device or retrieving the actual data from the CAS device.

In Figure 8, access to the data files is attempted and requested by the NAS client 6000 while in Figure 9 access is requested by the NAS client 7000 that is operating as a backup server. The direction of each arrow shows the direction of request or travel of data or stub.

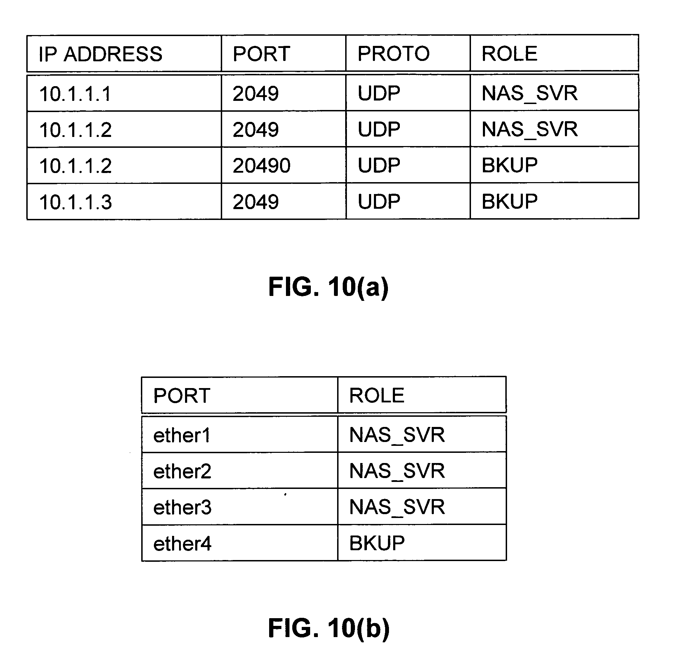

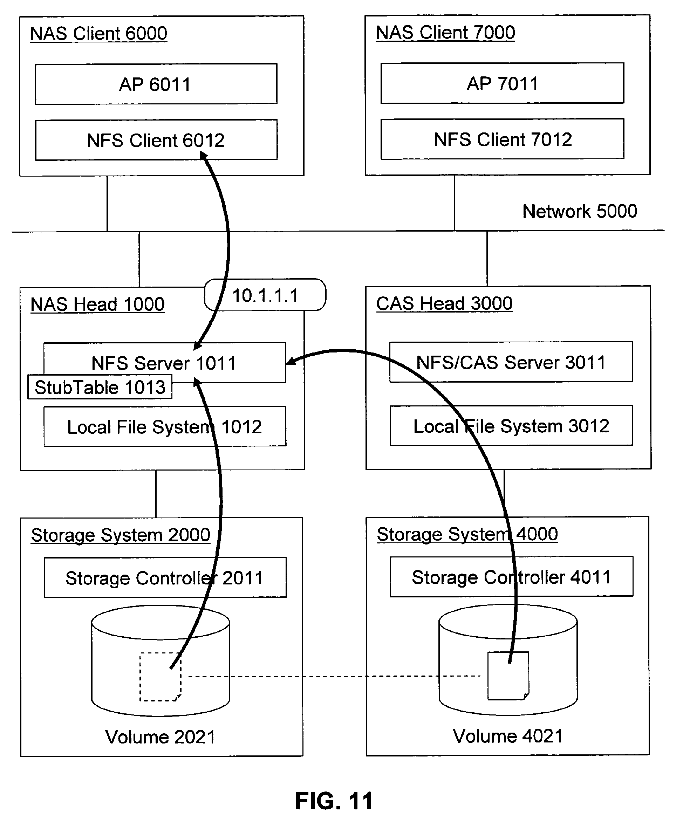

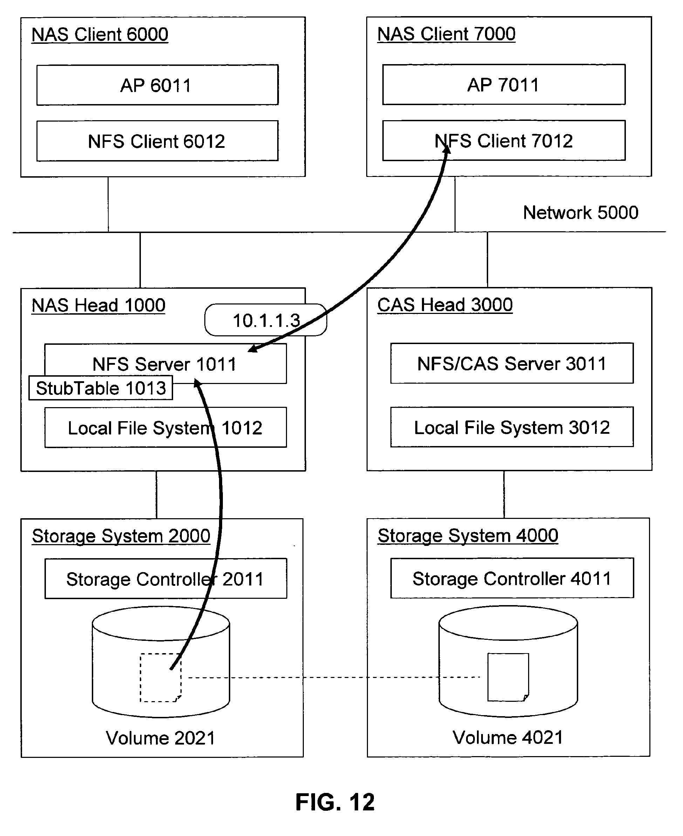

Figure 10(a) and Figure 10(b) show examples of specific destination address and port of NAS device to be utilized with a fourth method of accessing a data file, according to aspects of the present invention. Figure 11 shows a normal procedure, carried out according to a fourth method of accessing a data file, according to an exemplary aspect of the present invention. Figure 12 shows a special procedure, carried out according to the fourth method of accessing a data file, according to an exemplary aspect of the present invention.

A fourth method of distinguishing a normal access to the NAS device from a special access for backup purposes is described with respect to Figure 10(a), Figure 10(b), Figure 11 and Figure 12.

The fourth method uses information regarding a specific destination address or port of the NAS device. The NAS access to a specific destination address or port of the NAS device is processed as a special NAS access for backup operation. Figure 10(a) shows examples of specific destination addresses and Figure 10(b) shows examples of specific ports of the NAS device that are used for backup access to the NAS device.

Figure 10(a) includes four columns listing the IP address, the port number on the NAS device, the internet or intranet protocol used to access the device, and the role of the NAS device if it is accessed from that particular IP address. The information listed in the ROLE column of Figure 10(a) is either "NAS_SVR" or "BKUP". This information allows the NAS device to classify normal and backup NAS accesses. All of the information in one row of the table pertains to the same port of the NAS device. This port may be assigned different IP addresses and may be accessed by different protocols. The NAS device is accessed through the port. The IP address of the port, through which the NAS devices is accessed, determines if the access is for actual retrieval of data or for backup only. For example, if the NAS device is accessed through port 2049 that has the IP address 10.1.1.1, and uses the internet access protocol UDP, then the NAS device is used as a normal server and will provide the actual data file to the NAS client that initiated the access. If the NAS device is accessed at the same port 2049, that is now assigned the IP address 10.1.1.3, and uses the same internet access protocol UDP, the NAS device is assigned the role of backup. This time, an access to the NAS device through the same port 2049 will indicate to the NAS device that the NAS device is being accessed for data backup purposes and no actual data file will be transferred to the NAS client that initiates the access.

Figure 10(b) includes only two columns listing the port number on the NAS device and the role of the NAS device if it is accessed from that particular port. For example, if the NAS client accesses the NAS device through ports that are labeled ether1, ether2 or ether3, the NAS device will respond as a normal server and will provide the actual data file that was requested by the NAS client to the NAS client. On the other hand, if the NAS device is accessed through the port ether4, then the NAS device determines this access to be for backup purposes only and will not provide the actual data file to the NAS client requesting access.

Figure 11 shows that when the NAS client 6000 accesses the NAS device at the IP address 10.1.1.1 owned by the NAS device, the NAS device will process the access as a normal NAS read access. In response to the access request, the NFS server 1011 sends stub data to the volume 2021 and the corresponding file is sent from the volume 4021 of the CAS device to the NFS server 1011 and back to the requesting NAS client 6000.

Figure 12 shows that when the NAS client 7000 accesses the NAS device at the IP address 10.1.1.3 owned by the NAS device, the NAS device will process the access as a special NAS read access. In response to the access request, the NFS server 1011 sends only the stub data to NAS client, not referring to the CAS device and not getting actual data from CAS device.

Any combination of the above four methods may be used to determine whether an access by a NAS client is a normal access for retrieving actual data or a special access for backup purposes. Further, using a combination of two or more methods allows the access to be more accurate.

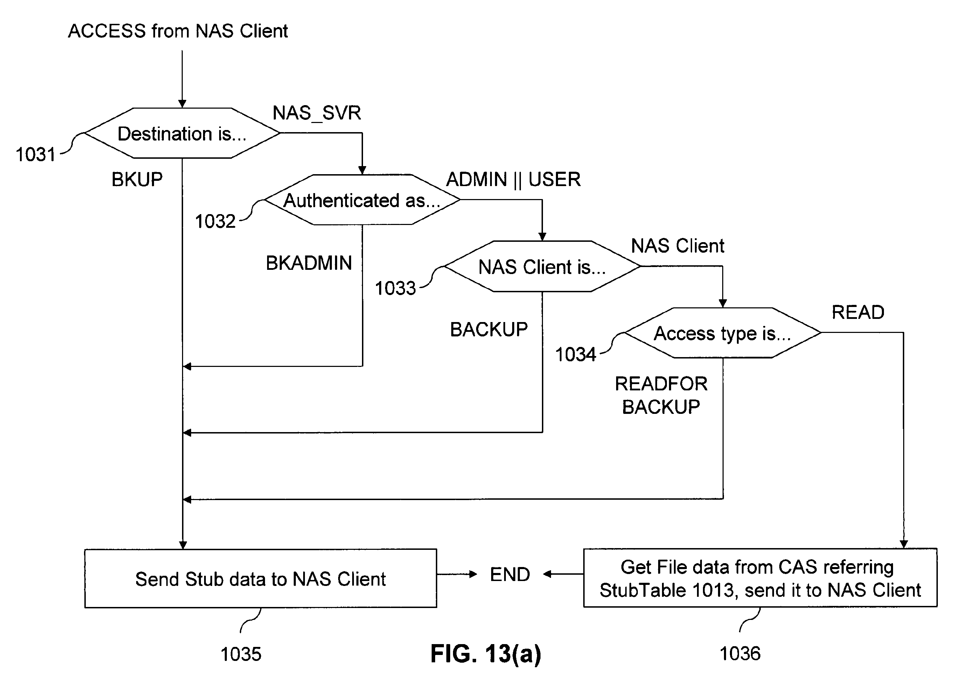

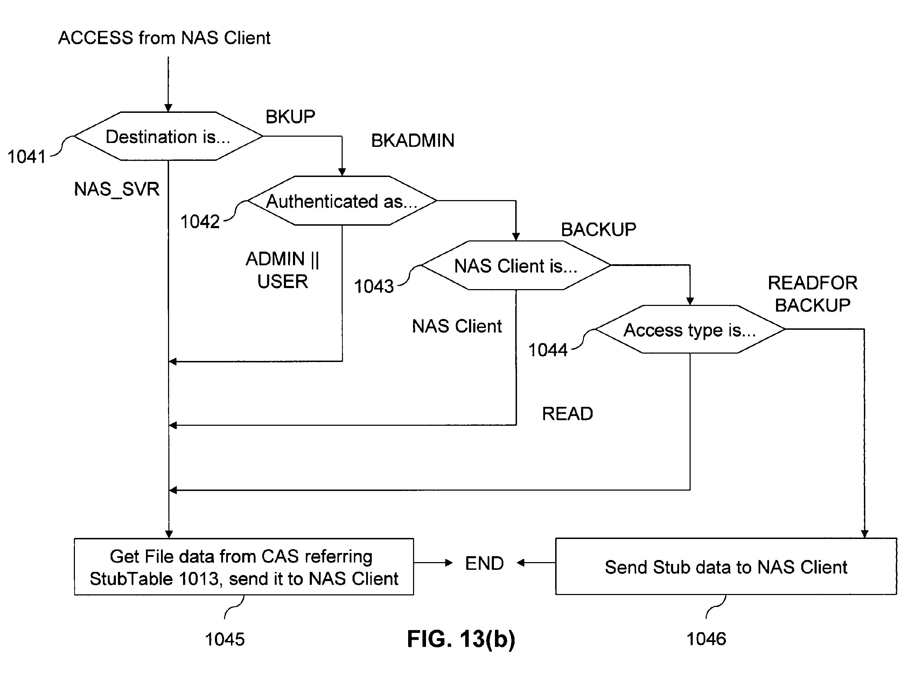

Figure 13(a) shows the procedure of classification, according to one aspect of the present invention. Figure 13(b) shows the procedure of classification, according to another aspect of the present invention.

Figure 13(a) shows the situation where if one of four conditions listed is met, the NAS device will process an incoming NAS read access as a specific NAS access for backup operation. On the other hands, Figure 13(b) shows the situation where all of the four conditions listed have to be met in order for the NAS device to process an incoming NAS read access as a specific NAS access for backup operation.

In Figure 13(a), an access request from the NAS client is received at the NAS device. At 1031, the NAS device determines whether the destination of the request is a NAS_SVR or a BKUP. If the destination is BKUP, the access request is determined to be a special request for backup. Then, at 1035, the NAS device sends stub data to the NAS client and the process ends. If at 1031, the destination is not BKUP and the request is not determined to be a backup request, the process moves to 1032 where it is determined whether the sender of the request is authenticated as BKADMIN or ADMINUSER. For a BKADMIN user, the request is determined to be a backup request and the process moves to 1035. For a regular user request, the process moves to 1033 where it is determined whether the NAS client sending the request is a NAS client or a BACKUP NAS client. For a BACKUP NAS client sender, the process moves to 1035 because the request is determined to be a special access request for backup only. If the request is by a regular NAS client, the process moves to 1034 where the access type is determined as a READ or a READFOR BACKUP. For a READFOR BACKUP access, the process moves to 1035 because the access is determined to be a special access request for backup only. If at 1034, the access type is determined to be READ, then the process moves to 1036 where actual data is retrieved from the CAS device by referring to the stub table 1013 and the data is sent to the requesting NAS client.

The order of processes in Figure 13(a) is such that four different possibilities are exhausted before actual data is retrieved and sent to the NAS client.

In Figure 13(b), an access request from the NAS client is received at the NAS device. At 1041, the NAS device determines whether the destination of the request is a NAS_SVR or a BKUP. If the destination is NAS_SVR, the access request is determined to be a normal request for data. Then, at 1045, the NAS device accesses the CAS device to retrieve actual data or data files and sends the actual data to the requesting NAS client and the process ends. If at 1041, the destination is not NAS_SVR and the request is not determined to be a normal request, the process moves to 1042 where it is determined whether the sender of the request is authenticated as BKADMIN or ADMINUSER. For a regular ADMIN or USER user, the request is determined to be a normal request and the process moves to 1045. For a BKADMIN user request, the process moves to 1043 where it is determined whether the NAS client sending the request is a NAS client or a BACKUP NAS client. For a NAS client sender, the process moves to 1045 because the request is determined to be a normal access request for actual data. If the request is by a BACKUP NAS client, the process moves to 1044 where the access type is determined as a READ or a READFOR BACKUP. For a READ access, the process moves to 1045 because the access is determined to be a normal access request for actual data. If at 1044, the access type is determined to be READFOR BACKUP, then the process moves to 1046 where the request is finally determined to be a special request for backup only and only stub data is sent to the requesting NAS client.

The order of processes in Figure 13(b) is such that priority is given to identifying a normal access request and actual data is retrieved and sent to the NAS client as soon as the request is determined as a normal request. In other words, the process is more interested in rapidly identifying a normal request and may potentially take more time or more steps to identify a special access request.

Figure 14, Figure 15 and Figure 16 show the handling of a read access of backup operation, according to aspects of the present invention.

There are several variations of handling a read access for a backup operation. A general form of this operation was shown in Figure 6. In a first variation, stub data is sent to the NAS client. In a second variation, actual archived data derived from stub data is sent to the NAS client. Finally, in a third variation, the existence of stub data is hidden from the NAS client. Aspects of the present invention permit a storage administrator to determine which option to choose by configuring a StubAct table 1014 shown in Figure 3(b). The StubAct table 1014 shows the various actions that each stub signifies. The three types of actions listed in the StubAct table 1014 are send stub, send data and hide. Each action is listed as corresponding to a path that shows the source of the file on the NAS device.

Figure 14 shows the condition where stub data "1" is configured as "SEND STUB" in the StubAct table 1014. Then, in response to a read access for backup by the NAS client 7000, the NFS server 1011 sends only the stub data to the NAS client which is acting as backup server. The stub data is shown with a dotted border. The NAS client 7000 requests read access from the NFS server 1011. The NFS server refers to the StubAct table 1014 to check the action listed for the requested stub. If the action is send stub, then the NFS server sends only the stub data 1, shown in dotted line, back to the NAS client 7000.

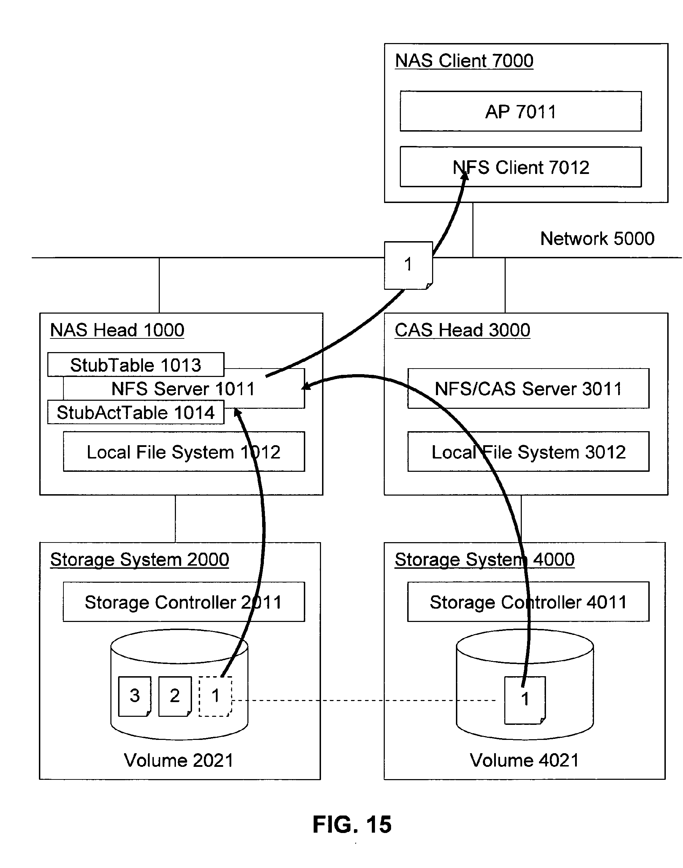

Figure 15 shows the condition where stub data "1" is configured as "SEND DATA" in StubAct table 1014. Then, the NFS server 1011 sends actual archived data derived from stub data to the NAS client which is also acting as backup server. The actual data is shown with a solid border. The NAS client 7000 requests read access from the NFS server 1011. The NFS server refers to the StubAct table 1014 to check the action listed for the requested stub. If the action is send data, then the NFS server accesses the corresponding archived data that is stored in the CAS system on volume 4021 and sends the actual data file 1, shown in solid line, back to the NAS client 7000.

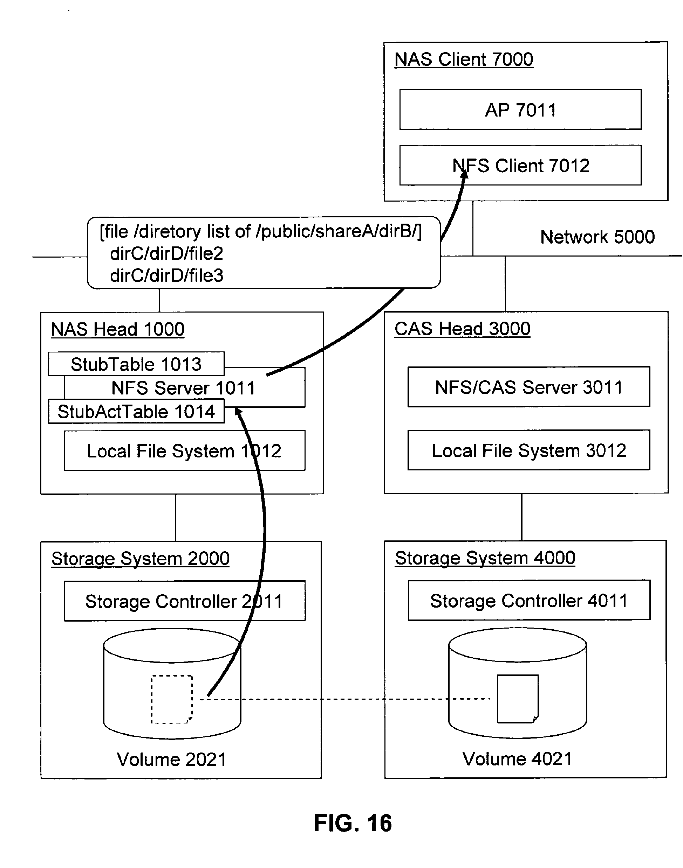

Figure 16 shows the condition where stub data "1" is configured as "HIDE" in the StubAct table 1014. Then, the NFS server 1011 will not show the stub in a file list which is obtained by command "Is" from the NAS client. The "Is" command is a UNIX command which gives user the file/directory list of a specified directory.

Figure 17, Figure 18, Figure 19, Figure 20 and Figure 21 show various methods of checking stub expiration according to aspects of the present invention.

The stub table 1013 that is shown in Figure 3(a) lists two possible conditions for each stub that include "linked" and "lost." The linked condition applies when the stub and the actual archived data are linked. The lost condition applies when the link between the stub and the actual archived data has been lost. Write access occurs from a backup server, when the write access is part of a data restoration operation. During data restoration, actual archived data are restored to the NAS client operating as a backup server. Aspects of the present invention provide methods of checking stub expiration when actual archived data corresponding to a stub is to be retrieved and restored in the NAS device. Because if the condition of the stub is listed as lost, then the actual archived data derived from this stub data has already been erased. In that case, it might be meaningless to write this stub data into NAS device.

Figure 17 shows a procedure for checking stub expiration. In this process, a request for write access of stub data comes from the backup server. The request is to write the stub data as restore. At 1051, the NAS device checks the stub table 1013 to determine whether a link between the stub data and the actual archived data still exists or not. If the link is lost, the process proceeds to 1054 where an error message may be sent to the NAS client. If the stub data and the actual archived data are still linked, the process moves to 1052. At 1052, the NAS device attempts to access the actual archived data and updates the stub table 1013 if needed. If the stub data and the actual archived data have lost their link, at 1053 the stub table is updated to reflect the lost link. When the link is determined as lost, the process moves to 1054 where an error message may be sent to the NAS client. The NAS device can inform the NAS client, that is serving as backup server, of the link condition between the stub data and actual archived data. Determining the link condition helps the backup server to determine whether archived data corresponding to a particular stub data should be restored or not.

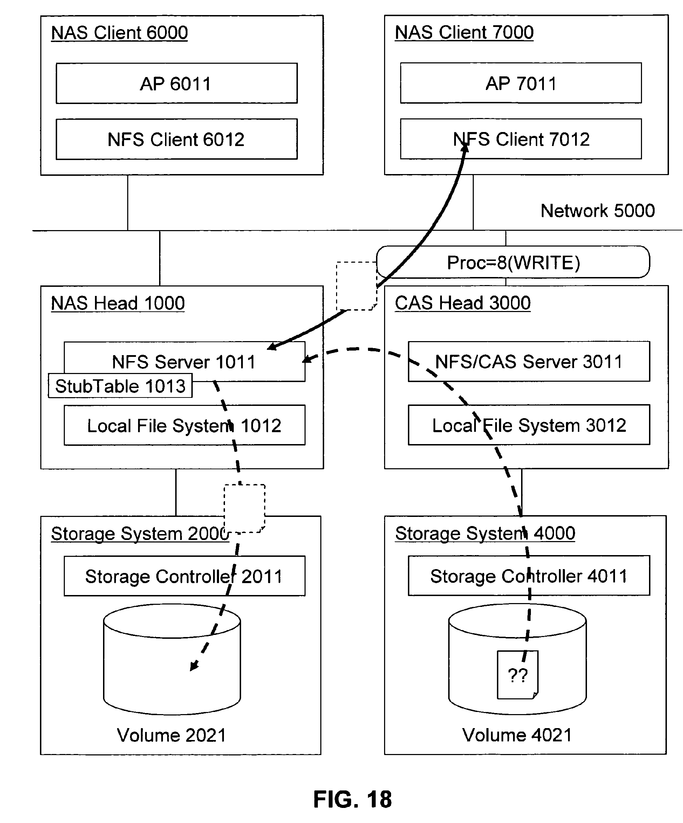

Figure 18 shows the condition that the NFS server checks stub expiration when write access of stub data is occurred. In Figure 18, the NAS client 7000, that operates as a backup server, accesses the NFS server 1011 of the NAS device to restore archived data. The NFS server 1011 refers to the stub table 1013 to determine the condition of the link between the stub and the actual archived data. If the link is in good condition and the stub and the data are linked, the archived data corresponding to the stub is retrieved from the CAS device at volume 4021 and restored to the NAS client 7000. The stub data is also restored to the NAS client 7000.

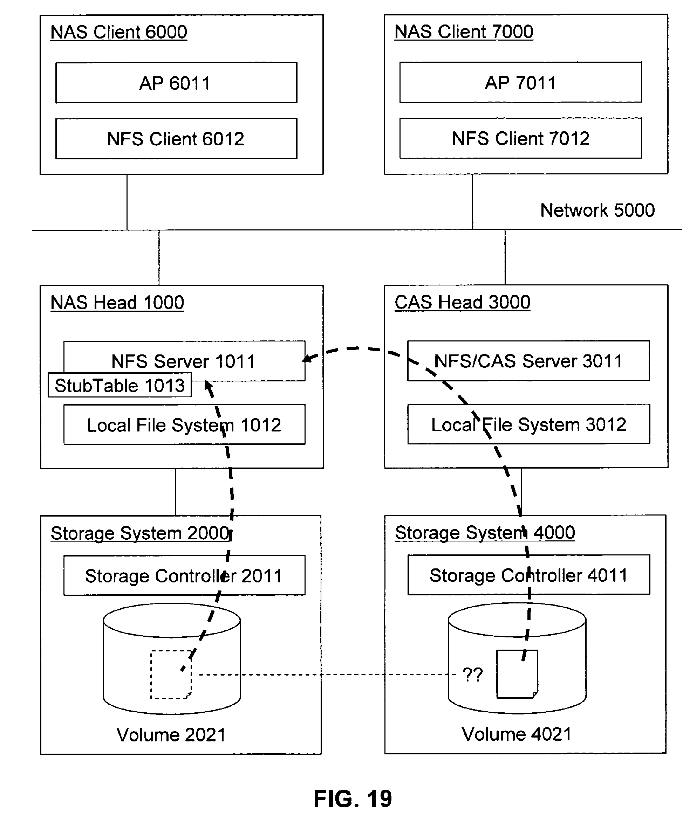

Figure 19 shows the condition that the NFS server checks stub expiration periodically. When expiration is detected, the NFS server updates the stub table 1013. The NFS server 1011 accesses the stubs in the volume 2021 and if no actual data corresponding to the stub is found on the CAS system, at volume 4021, the NFS server 1011 updates the stub table 1013 to show that the link between the stub and the data is lost.

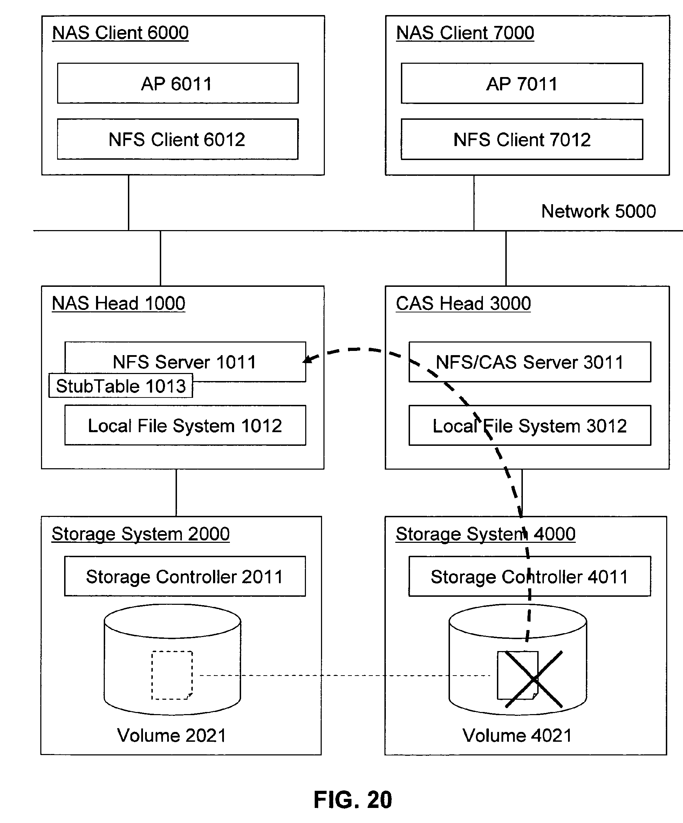

Figure 20 shows the condition that CAS server informs the expiration of stub data to NFS server. When actual archived data is erased, The CAS server informs the NFS server about the erasure of data. The volume 4021 on the CAS system includes the actual archived data. When a file on the volume 4021 is erased, the CAS system notifies the NFS server 1011 and the NFS server 1011 updates the stub table 1013 to show that the stub corresponding to the erased files is no longer linked to the files.

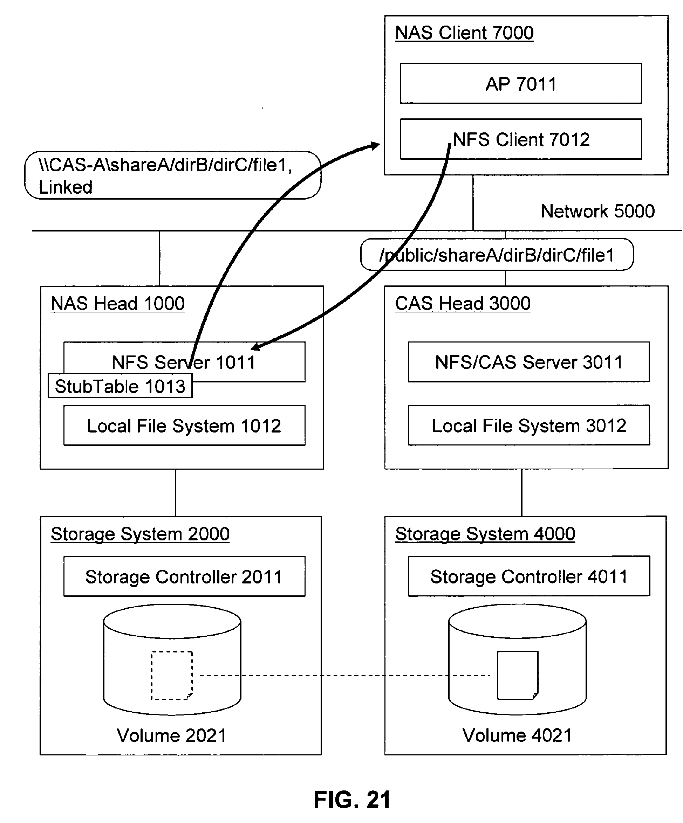

Figure 21 shows the condition that the NFS server provides an Application Programming Interface (API) to provide expiration information derived from the stub table 1013. The NFS server informs the NAS client regarding the link condition between stub data and the actual archived data.

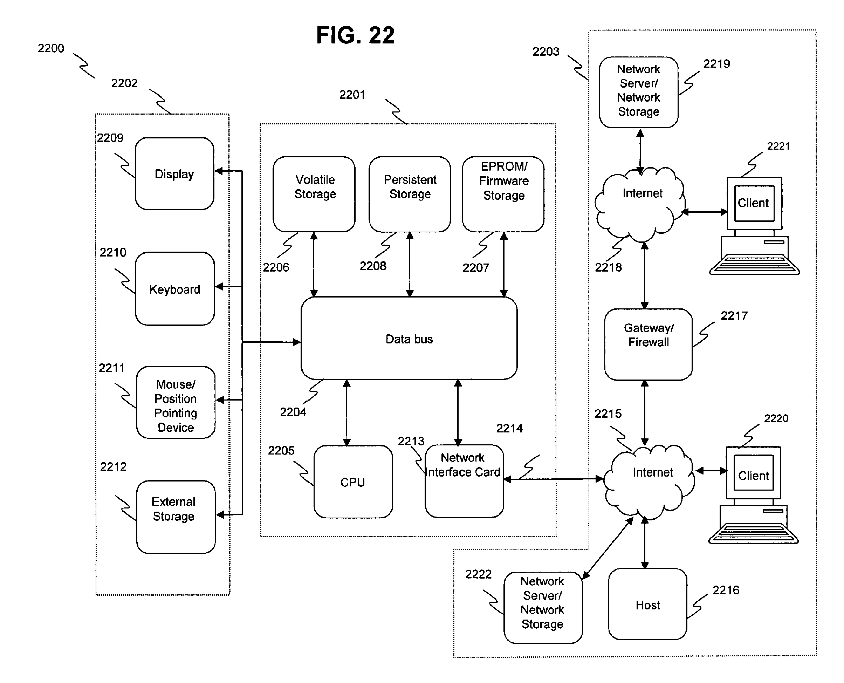

Figure 22 is a block diagram that illustrates an embodiment of a computer/server system 2200 upon which an embodiment of the inventive methodology may be implemented. The system 2200 includes a computer/server platform 2201, peripheral devices 2202 and network resources 2203.

The computer platform 2201 may include a data bus 2204 or other communication mechanism for communicating information across and among various parts of the computer platform 2201, and a processor 2205 coupled with bus 2201 for processing information and performing other computational and control tasks. Computer platform 2201 also includes a volatile storage 2206, such as a random access memory (RAM) or other dynamic storage device, coupled to bus 2204 for storing various information as well as instructions to be executed by processor 2205. The volatile storage 2206 also may be used for storing temporary variables or other intermediate information during execution of instructions by processor 2205. Computer platform 2201 may further include a read only memory (ROM or EPROM) 2207 or other static storage device coupled to bus 2204 for storing static information and instructions for processor 2205, such as basic input-output system (BIOS), as well as various system configuration parameters. A persistent storage device 2208, such as a magnetic disk, optical disk, or solid-state flash memory device is provided and coupled to bus 2201 for storing information and instructions.

Computer platform 2201 may be coupled via bus 2204 to a display 2209, such as a cathode ray tube (CRT), plasma display, or a liquid crystal display (LCD), for displaying information to a system administrator or user of the computer platform 2201. An input device 2210, including alphanumeric and other keys, is coupled to bus 2201 for communicating information and command selections to processor 2205. Another type of user input device is cursor control device 2211, such as a mouse, a trackball, or cursor direction keys for communicating direction information and command selections to processor 2204 and for controlling cursor movement on display 2209. This input device typically has two degrees of freedom in two axes, a first axis (e.g., x) and a second axis (e.g., y), that allows the device to specify positions in a plane.

An external storage device 2212 may be coupled to the computer platform 2201 via bus 2204 to provide an extra or removable storage capacity for the computer platform 2201. In an embodiment of the computer system 2200, the external removable storage device 2212 may be used to facilitate exchange of data with other computer systems.

The invention is related to the use of computer system 2200 for implementing the techniques described herein. In an embodiment, the inventive system may reside on a machine such as computer platform 2201. According to one embodiment of the invention, the techniques described herein are performed by computer system 2200 in response to processor 2205 executing one or more sequences of one or more instructions contained in the volatile memory 2206. Such instructions may be read into volatile memory 2206 from another computer-readable medium, such as persistent storage device 2208. Execution of the sequences of instructions contained in the volatile memory 2206 causes processor 2205 to perform the process steps described herein. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing instructions to processor 2205 for execution. The computer-readable medium is just one example of a machine-readable medium, which may carry instructions for implementing any of the methods and/or techniques described herein. Such a medium may take many forms, including but not limited to, non-volatile media, volatile media, and transmission media. Non-volatile media includes, for example, optical or magnetic disks, such as storage device 2208. Volatile media includes dynamic memory, such as volatile storage 2206. Transmission media includes coaxial cables, copper wire and fiber optics, including the wires that comprise data bus 2204. Transmission media can also take the form of acoustic or light waves, such as those generated during radio-wave and infra-red data communications.

Common forms of computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, an EPROM, a FLASH-EPROM, a flash drive, a memory card, any other memory chip or cartridge, a carrier wave as described hereinafter, or any other medium from which a computer can read.

Various forms of computer readable media may be involved in carrying one or more sequences of one or more instructions to processor 2205 for execution. For example, the instructions may initially be carried on a magnetic disk from a remote computer. Alternatively, a remote computer can load the instructions into its dynamic memory and send the instructions over a telephone line using a modem. A modem local to computer system 2200 can receive the data on the telephone line and use an infra-red transmitter to convert the data to an infra-red signal. An infra-red detector can receive the data carried in the infra-red signal and appropriate circuitry can place the data on the data bus 2204. The bus 2204 carries the data to the volatile storage 2206, from which processor 2205 retrieves and executes the instructions. The instructions received by the volatile memory 2206 may optionally be stored on persistent storage device 2208 either before or after execution by processor 2205. The instructions may also be downloaded into the computer platform 2201 via Internet using a variety of network data communication protocols well known in the art.

The computer platform 2201 also includes a communication interface, such as network interface card 2213 coupled to the data bus 2204. Communication interface 2213 provides a two-way data communication coupling to a network link 2214 that is coupled to a local network 2215. For example, communication interface 2213 may be an integrated services digital network (ISDN) card or a modem to provide a data communication connection to a corresponding type of telephone line. As another example, communication interface 2213 may be a local area network interface card (LAN NIC) to provide a data communication connection to a compatible LAN. Wireless links, such as well-known 802.11 a, 802.11 b, 802.11 g and Bluetooth may also used for network implementation. In any such implementation, communication interface 2213 sends and receives electrical, electromagnetic or optical signals that carry digital data streams representing various types of information.

Network link 2213 typically provides data communication through one or more networks to other network resources. For example, network link 2214 may provide a connection through local network 2215 to a host computer 2216, or a network storage/server 2217. Additionally or alternatively, the network link 2213 may connect through gateway/firewall 2217 to the wide-area or global network 2218, such as an Internet. Thus, the computer platform 2201 can access network resources located anywhere on the Internet 2218, such as a remote network storage/server 2219. On the other hand, the computer platform 2201 may also be accessed by clients located anywhere on the local area network 2215 and/or the Internet 2218. The network clients 2220 and 2221 may themselves be implemented based on the computer platform similar to the platform 2201.

Local network 2215 and the Internet 2218 both use electrical, electromagnetic or optical signals that carry digital data streams. The signals through the various networks and the signals on network link 2214 and through communication interface 2213, which carry the digital data to and from computer platform 2201, are exemplary forms of carrier waves transporting the information.

Computer platform 2201 can send messages and receive data, including program code, through the variety of network(s) including Internet 2218 and LAN 2215, network link 2214 and communication interface 2213. In the Internet example, when the system 2201 acts as a network server, it might transmit a requested code or data for an application program running on client(s) 2220 and/or 2221 through Internet 2218, gateway/firewall 2217, local area network 2215 and communication interface 2213. Similarly, it may receive code from other network resources.

The received code may be executed by processor 2205 as it is received, and/or stored in persistent or volatile storage devices 2208 and 2206, respectively, or other non-volatile storage for later execution. In this manner, computer system 2201 may obtain application code in the form of a carrier wave.

While the description above illustrated the present invention in the context of integrated NAS and CAS data backup systems, it would be appreciated by persons of askill in the art that the present invention is not so limited. The inventive methodology may be applied to any active data storage device and archive data storage device.

It should be noted that the present invention is not limited to any specific firewall system. The inventive policy-based content processing system may be used in any of the three firewall operating modes and specifically NAT, routed and transparent.

Finally, it should be understood that processes and techniques described herein are not inherently related to any particular apparatus and may be implemented by any suitable combination of components. Further, various types of general purpose devices may be used in accordance with the teachings described herein. It may also prove advantageous to construct specialized apparatus to perform the method steps described herein. The present invention has been described in relation to particular examples, which are intended in all respects to be illustrative rather than restrictive. Those skilled in the art will appreciate that many different combinations of hardware, software, and firmware will be suitable for practicing the present invention. For example, the described software may be implemented in a wide variety of programming or scripting languages, such as Assembler, C/C++, perl, shell, PHP, Java, etc.

Moreover, other implementations of the invention will be apparent to those skilled in the art from consideration of the specification and practice of the invention disclosed herein. Various aspects and/or components of the described embodiments may be used singly or in any combination in the computerized storage system with data management functionality. It is intended that the specification and examples be considered as exemplary only, with a true scope and spirit of the invention being indicated by the following claims.

## Claims

1. A computerized data storage system comprising:
a. An active data storage device comprising an active data storage unit operable to store active data and an active data sharing device operable to enable sharing of the stored active data;
b. An archive data storage device comprising an archive data storage unit operable to store archive data and an archiving device operable to enable archiving of the active data to the archive data storage unit;
c. A first client comprising an archive module operable to migrate the active data from the active data storage device to the archive data storage device for archiving and further operable to make a stub data indicating destination of the archive data in the archive data storage device, the archive data corresponding to the migrated active data; and
d. A second client operable to send data access command to the active data storage device, wherein the active data storage device is operable to classify a type of the data access command received from the second client and to provide the second client the stub data or the archive data depending on the type of the received data access command.

2. The computerized data storage system of claim 1, wherein the active data storage device is a network attached storage (NAS) device, the active data storage unit is a NAS data storage device; the active data sharing device is a NAS head and the second client is a NAS client.

3. The computerized data storage system of claim 1 or 2, wherein the archive data storage device is a content-aware storage (CAS) device, the archive data storage unit is a CAS data storage device; the archiving device is a CAS head and the first client is a CAS client.

4. The computerized data storage system of claim 1, 2 or 3, wherein when the type of the data access command is classified by the active data storage device as a backup-related command, active data storage device is operable to provide the second client the stub data corresponding to the archive data.

5. The computerized data storage system of claim 1, 2 or 3, wherein when the type of the data access command is classified by the active data storage device as non backup-related command, active data storage device is operable to provide the second client the archive data.

6. The computerized data storage system of any one of claims 1 to 5, wherein the second client is operable to embed information into at least one access packet corresponding to the data access command, the information being indicative of the type of the data access command.

7. The computerized data storage system of claim 6, wherein the embedded information is being indicative of whether the data access command is a backup-related command or non backup-related command.

8. The computerized data storage system of any one of claims 1 to 7, wherein the active data storage device is operable to use authentication information to determine the type of the data access command.

9. The computerized data storage system of claim 8, wherein the authentication information is indicative of whether the data access command is a backup-related command or non backup-related command.

10. The computerized data storage system of any one of claims 1 to 7, wherein the active data storage device is operable to use access control information to determine the type of the data access command.

11. The computerized data storage system of claim 10, wherein the access control information is indicative of whether the data access command is a backup-related command or non backup-related command.

12. The computerized data storage system of any one of claims 1 to 7, wherein the active data storage device comprises a plurality of ports, wherein the active data storage device is operable to identify a target port of the plurality of ports associated with the data access command to determine the type of the data access command.

13. The computerized data storage system of claim 12, wherein the target port of the plurality of ports is indicative of whether the data access command is a backup-related command or non backup-related command and wherein the target port is physical or logical.

14. A computerized data storage system comprising:
a. A active data storage device comprising an active data storage unit operable to store active data and an active data sharing device operable to enable sharing of the stored active data;
b. A archive data storage device comprising an archive data storage unit operable to store archive data and an archiving device operable to enable archiving of the active data to the archive data storage unit;
c. A first client comprising an archive module operable to migrate the active data from the active data storage device to the archive data storage device for archiving and further operable to make a stub data indicating destination of the archive data in the archive data storage device, the archive data corresponding to the migrated active data; and
d. A second client operable to send data access command to the active data storage device, wherein the archive data storage device is operable to erase the archive data corresponding to the stub data after a predetermined time period and wherein active data storage device is operable to verify whether the archive data corresponding to the stub data exists in the archive data storage device.

15. The computerized data storage system of claim 14, wherein the active data storage device is a network attached storage (NAS) device, the active data storage unit is a NAS data storage device; the active data sharing device is a NAS head and the second client is a NAS client.
